# FASCICULE DE BREVET EUROPEEN

(11) **EP 4 305 287 B1**
(45) Date de publication et mention de la délivrance du brevet: **01.04.2026**
(21) Numéro de dépôt: 22707184.2
(22) Date de dépôt: 24.02.2022
(51) Int. Cl.: F02C 3/22, F02C 7/22, F02C 7/224, F02C 9/40, F04D 13/04

(54) **SYSTÈME ET PROCÉDÉ DE CONDITIONNEMENT DE CARBURANT CONFIGURÉ POUR ALIMENTER UN TURBOMOTEUR D'AÉRONEF À PARTIR DE CARBURANT ISSU D'UN RÉSERVOIR CRYOGÉNIQUE**
BRENNSTOFFKONDITIONIERUNGSSYSTEM UND VERFAHREN ZUR VERSORGUNG EINES FLUGZEUGTURBINENMOTORS MIT BRENNSTOFF AUS EINEM KRYOTANK
FUEL CONDITIONING SYSTEM AND METHOD CONFIGURED TO SUPPLY AN AIRCRAFT TURBINE ENGINE USING FUEL FROM A CRYOGENIC TANK

(30) Priorité: 08.03.2021 FR 2102185
(43) Date de publication de la demande: 17.01.2024
(73) Titulaire: SAFRAN, 75015 Paris (FR)
(72) Inventeur: LAMBERT, Pierre-Alain, 77550 MOISSY-CRAMAYEL (FR); MAALOUF, Samer, 77550 MOISSY-CRAMAYEL (FR)
(74) Mandataire: Argyma
(86) Numéro de dépôt international: PCT/EP2022/054594
(87) Numéro de publication internationale: WO 2022/189154

(56) Documents cités:
- EP-A1- 3 623 604
- EP-A2- 1 672 270
- GB-A- 2 240 813
- US-A1- 2014 165 584

## Description

### Domaine technique

La présente invention concerne le domaine des aéronefs comportant des turbomoteurs alimentés par du carburant stocké dans un réservoir cryogénique.

Il est connu de stocker du carburant, en particulier de l'hydrogène, sous forme liquide pour limiter l'encombrement et la masse des réservoirs de l'aéronef. A titre d'exemple, le carburant est stocké à une température de l'ordre de 20 à 22 Kelvins (-253 à -251°C) dans un réservoir cryogénique de l'aéronef.

Afin de pouvoir être injecté dans la chambre de combustion d'un turbomoteur, le carburant doit être pompé et chauffé afin de permettre une combustion optimale. Une telle étape de chauffage est par exemple nécessaire pour réduire le risque de givrage de la vapeur d'eau contenue dans l'air qui circule dans le turbomoteur, en particulier, au niveau des injecteurs de carburant du turbomoteur.

En pratique, l'étape de chauffage de carburant est énergivore et nécessite de prélever des calories sur des sources chaudes de l'aéronef. A titre d'exemple, la chaleur générée par le turbomoteur peut être utilisée (chaleur issue de l'huile de lubrification, calories en sortie de turbine, chaleur de la tuyère, etc.). La chaleur issue de l'aéronef peut également être utilisée (air issu de la cabine, chaleur issue de systèmes électriques ou électroniques, etc.).

Une des problématiques est d'optimiser le réchauffage du carburant tout en tirant avantage des propriétés de refroidissement du carburant lors de son transport du réservoir cryogénique jusqu'à la chambre de combustion du turbomoteur tout en garantissant une sécurité élevée.

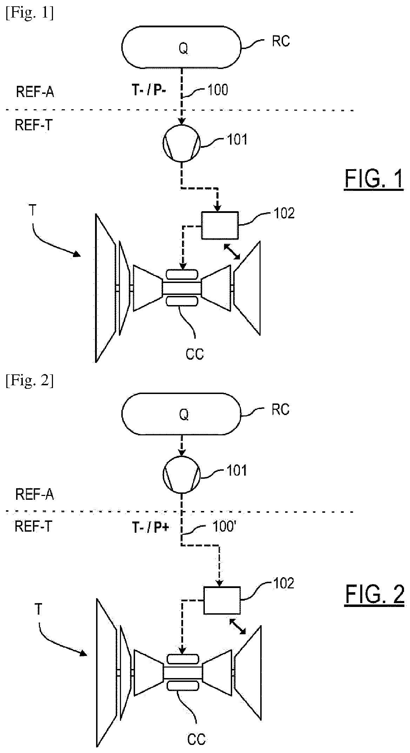

Dans l'art antérieur, en référence aux figures 1 et 2, il a été proposé plusieurs architectures pour conduire du carburant Q d'un réservoir cryogénique RC jusqu'à la chambre de combustion CC d'un turbomoteur T. De manière connue, le réservoir cryogénique RC appartient au référentiel de l'aéronef REF-A tandis que la chambre de combustion CC appartient au référentiel du turbomoteur REF-T.

Par la suite, les termes « amont » et « aval » sont définis par rapport au sens de circulation du carburant Q du réservoir cryogénique RC jusqu'à la chambre de combustion CC.

En référence à la [Fig.1] représentant une première architecture, il a été proposé de prévoir successivement, d'amont en aval, une pompe 101, appartenant au référentiel du turbomoteur REF-T, et un échangeur de chaleur 102 prélevant des calories au turbomoteur T, en particulier, au niveau de la tuyère du turbomoteur T avant d'injecter du carburant Q dans la chambre de combustion CC. La pompe 101 est reliée au réservoir cryogénique RC par une conduite de transport 100 qui assure l'interface entre les deux référentiels REF-A, REF-T.

Une telle première architecture présente plusieurs inconvénients. Tout d'abord, le carburant Q est conduit avec une faible pression et une faible température dans la conduite de transport 100 jusqu'à la pompe 101 qui doit donc être isolée thermiquement, ce qui présente des inconvénients. De plus, la présence d'un échangeur de chaleur 102 dans la tuyère du turbomoteur T impacte les performances du turbomoteur T. En outre, au cours des phases transitoires (démarrage/arrêt), la longueur des conduites de transport 100 entraine des risques d'instabilités thermo-fluidiques importants, ce qui impose des durées importantes de mise ou de remise en froid préjudiciables à la sécurité et à l'opérabilité du turbomoteur T.

En référence à la [Fig.2] représentant une deuxième architecture, il a été proposé de déporter la pompe 101 au plus près du réservoir cryogénique RC, c'est-à-dire dans le référentiel de l'aéronef REF-A afin de réduire l'encombrement dans le référentiel du turbomoteur REF-T. Le carburant Q est comprimé avec une forte pression et une faible température dans une conduite de transport 100' reliant la pompe 101 à l'échangeur 102. De manière analogue à précédemment, la conduite de transport 100' doit être isolée thermiquement mais également renforcée mécaniquement pour résister à la pression élevée du carburant Q.

Dans les deux architectures, en raison de la très basse température du carburant Q dans les conduites de transport 100, 100', seul de l'hélium peut être utilisé comme gaz de balayage ou de conditionnement en cas de fuite de carburant Q. L'hélium doit être évité pour une application aéronautique commerciale étant donné que ce fluide est un gaz rare de coût élevé. On connaît dans l'art antérieur par la demande de brevet EP3623604A1 une turbomachine propulsive militaire destinée à fonctionner à très haute vitesse qui comporte un échangeur de chaleur configuré pour prélever des calories à l'échappement de manière à les fournir à un flux de carburant.

L'invention vise ainsi à éliminer au moins certains de ces inconvénients en proposant un nouveau système de conditionnement de carburant.

### PRESENTATION DE L'INVENTION

L'invention concerne un système de conditionnement de carburant selon la revendication 1, qui est configuré pour alimenter un turbomoteur d'aéronef à partir de carburant issu d'un réservoir cryogénique, le système de conditionnement comprenant :
- au moins une turbomachine de pompage, distincte du turbomoteur d'aéronef, comprenant une pompe et une turbine configurée pour entrainer la pompe, ladite pompe étant configurée pour prélever du carburant issu du réservoir cryogénique et le faire circuler d'amont en aval dans un circuit de carburant comprenant une sortie d'alimentation du turbomoteur, la turbine étant montée dans le circuit de carburant de manière à permettre l'entrainement en rotation de la turbine par la circulation du carburant,
- un premier échangeur thermique, monté en amont de la turbine, configuré pour réchauffer le carburant dans le circuit de carburant par circulation d'un flux d'air,
- au moins une turbomachine de chauffage, distincte du turbomoteur d'aéronef, configurée pour alimenter le premier échangeur thermique avec un flux d'air, la turbomachine de chauffage comportant un compresseur d'admission d'air, une chambre de combustion et une turbine d'échappement d'air configurée pour entrainer le compresseur d'admission d'air, la chambre de combustion étant alimentée par de l'air prélevé dans le flux d'air et par du carburant issu du circuit de carburant.

De manière avantageuse, l'utilisation d'une turbomachine de pompage couplée à une turbomachine de chauffage permet de réchauffer le carburant de manière autonome en consommant une faible fraction de carburant. Le carburant fourni en sortie possède une température compatible avec le turbomoteur, de préférence, une température proche de la température ambiante et une pression suffisante pour pouvoir être conduit au turbomoteur. Ainsi, le système de conditionnement peut avantageusement être positionné dans le référentiel de l'aéronef et non dans celui du turbomoteur, de préférence, à proximité du réservoir cryogénique. De manière avantageuse, de l'azote peut servir de gaz neutre pour les purges et balayages, la mise en œuvre du système de conditionnement s'en trouve grandement facilitée.

L'utilisation d'un premier échangeur thermique permet de transmettre les calories de la turbomachine de chauffage au carburant afin de le réchauffer de manière optimale. De manière avantageuse, la turbomachine de pompage est entrainée par la circulation du carburant dans le circuit de carburant, ce qui permet de simplifier la conception de la turbomachine de pompage en autorisant une faible fuite de carburant entre la pompe et la turbine, et augmente la sécurité.

De préférence, la chambre de combustion est alimentée par de l'air prélevé dans le flux d'air et par du carburant issu du circuit de carburant et prélevé en aval de la turbine. Le carburant possède de manière avantageuse une température et une pression optimale pour la chambre de combustion.

De préférence, le système comprend un deuxième échangeur thermique configuré pour réchauffer le carburant dans le circuit de carburant par circulation d'un flux d'air d'admission de la turbomachine de chauffage. Ainsi, l'air d'admission, qui circule à une température plus faible que l'air d'échappement, permet de réaliser un préchauffage du carburant avant son réchauffage par le premier échangeur thermique. Un tel préchauffage permet d'une part de réduire le risque de condensation des gaz chauds traversant le premier échangeur, et d'autre part de réduire la consommation du compresseur d'admission d'air de la turbomachine de chauffage.

Selon un aspect de l'invention, le système comprend un échangeur thermique auxiliaire configuré pour réchauffer le carburant dans une portion amont du circuit de carburant par circulation de carburant circulant en aval de la turbine. De manière avantageuse, un échange de calories par circulation de carburant ayant des températures différentes permet de réaliser un préchauffage progressif. Un tel préchauffage permet de réduire le risque de condensation de l'air dans les échangeurs suivants.

Selon un aspect de l'invention, le système comprend une génératrice électrique configurée pour être entrainée par la turbomachine de chauffage. Selon un aspect, la génératrice électrique est entrainée par une turbine libre configurée pour être entrainée par un flux d'air issu de la turbomachine de chauffage. Ainsi, la turbomachine de pompage permet de générer un flux d'air pour le premier échangeur de chaleur qui est utilisé par la turbine auxiliaire afin de produire de l'électricité. Le système de conditionnement produit ainsi de l'électricité pour participer à son autonomie.

Selon un autre aspect, la génératrice électrique est entrainée directement par la turbomachine de chauffage ou par l'intermédiaire d'un train d'engrenages.

De manière préférée, la turbomachine de chauffage est configurée pour mettre en œuvre un cycle de Brayton de manière à générer une chaleur importante par combustion d'une fraction du carburant.

De préférence, la turbomachine de pompage est baignée entièrement dans le carburant. Ainsi, il n'est pas nécessaire d'assurer une forte étanchéité entre la pompe et la turbine. De manière avantageuse, un guidage par paliers fluides peut être mis en œuvre de manière pratique.

De manière préférée, la turbomachine de pompage est une turbopompe hydrogène à expansion afin de permettre d'être entrainée par la circulation du carburant lorsque celui-ci est de l'hydrogène.

L'invention concerne également un ensemble d'au moins un réservoir cryogénique, d'un turbomoteur d'aéronef et d'un système de conditionnement, tel que présenté précédemment, reliant fluidiquement le réservoir cryogénique et le turbomoteur d'aéronef.

De préférence, le système de conditionnement est positionné à proximité du réservoir cryogénique et relié au turbomoteur par au moins une canalisation de circulation qui fait circuler du carburant à température ambiante. Une telle canalisation possède avantageusement une structure simple qui ne nécessite pas d'isolation thermique ou de mise en froid particulière.

Selon un aspect, le système de conditionnement est alimenté en air par un flux d'air extérieur au turbomoteur. Selon un autre aspect, le système de conditionnement est alimenté en air par un flux d'air issu du turbomoteur, en particulier, issu d'un compresseur du turbomoteur.

De préférence, l'ensemble comprend au moins une capacité de stockage tampon en carburant configurée pour être alimentée par le système de conditionnement et configurée pour alimenter le turbomoteur d'aéronef.

De manière préférée, la capacité de stockage tampon en carburant est configurée pour stocker du carburant à haute pression et à température ambiante. Ainsi, le carburant d'une capacité de stockage tampon est directement utilisable par un turbomoteur et, ce, de manière réactive en fonction des besoins du turbomoteur.

Selon la revendication 10, l'invention concerne également un procédé de conditionnement de carburant au moyen d'un système de conditionnement, tel que présenté précédemment, pour alimenter un turbomoteur d'aéronef à partir de carburant issu d'un réservoir cryogénique, procédé dans lequel :
- la pompe de la turbomachine de pompage prélève du carburant dans le réservoir cryogénique et le fait circuler d'amont en aval dans un circuit de carburant,
- le carburant est réchauffé dans le circuit de carburant par le premier échangeur thermique par circulation d'un flux d'air issu de la turbomachine de chauffage,
- la circulation du carburant dans le circuit de carburant entrainant en rotation la turbine de la turbomachine de pompage, et
- la chambre de combustion de la turbomachine de chauffage étant alimentée par de l'air prélevé dans le flux d'air et par du carburant issu du circuit de carburant.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1] est une représentation schématique d'une première architecture pour le conditionnement de carburant d'un réservoir cryogénique jusqu'à un turbomoteur selon l'art antérieur.
La [Fig.2] est une représentation schématique d'une deuxième architecture pour le conditionnement de carburant d'un réservoir cryogénique jusqu'à un turbomoteur selon l'art antérieur.
La [Fig.3] est une représentation schématique d'une architecture pour le conditionnement de carburant d'un réservoir cryogénique jusqu'à un turbomoteur avec un système de conditionnement selon l'invention.
La [Fig.4] est une représentation schématique d'une première forme de réalisation du système de conditionnement.
La [Fig.5] est une représentation schématique d'une deuxième forme de réalisation du système de conditionnement.
La [Fig.6] est une représentation schématique d'une troisième forme de réalisation du système de conditionnement.
La [Fig.7] est une représentation schématique d'un système de conditionnement. pour alimenter une capacité de stockage tampon en carburant.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

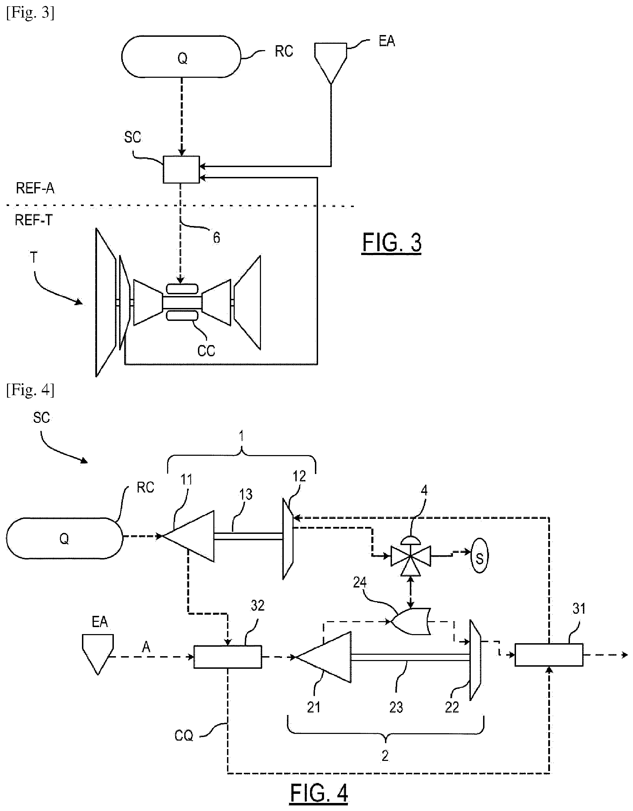

En référence à la [Fig.3], il est représenté une architecture selon une forme de réalisation de l'invention pour conduire du carburant Q d'un réservoir cryogénique RC jusqu'à la chambre de combustion CC d'un turbomoteur T d'un aéronef. De manière connue, le réservoir cryogénique RC appartient au référentiel de l'aéronef REF-A tandis que la chambre de combustion CC appartient au référentiel du turbomoteur REF-T.

Dans cet exemple, le carburant est de l'hydrogène liquide mais l'invention s'applique à d'autres types de carburant, par exemple, du méthane liquide ou du gaz naturel liquéfié.

Selon l'invention, il est prévu un système de conditionnement de carburant SC configuré pour alimenter la chambre de combustion CC du turbomoteur T à partir de carburant en phase liquide issu du réservoir cryogénique RC. Le système de conditionnement SC appartient au référentiel aéronef REF-A et permet de pomper le carburant Q au plus près du réservoir cryogénique RC. L'encombrement dans le référentiel du turbomoteur REF-T est ainsi réduit. Comme cela sera présenté par la suite, le système de conditionnement SC permet de réchauffer le carburant à une température optimale par circulation d'un flux d'air issu d'une entrée d'air EA. Le système de conditionnement de carburant SC est relié au turbomoteur T par une conduite de circulation 6.

En référence à la [Fig.4], le système de conditionnement SC comprend une turbomachine de pompage 1, un circuit de carburant CQ, une turbomachine de chauffage 2, un premier échangeur thermique 31 et un deuxième échangeur thermique 32.

Comme illustré à la [Fig.4], il est représenté une turbomachine de pompage 1 (appelée également turbopompe), comprenant une pompe 11 et une turbine 12 configurée pour entrainer la pompe 11, la pompe 11 étant configurée pour prélever du carburant Q dans le réservoir cryogénique RC et le faire circuler d'amont en aval dans le circuit de carburant CQ. Dans cet exemple, la pompe 11 et la turbine 12 sont reliées solidairement en rotation par un arbre 13.

Le circuit de carburant CQ (en tirets rapprochés sur la [Fig.4]) comprend ainsi une entrée configurée pour être connecté fluidiquement au réservoir cryogénique RC et une sortie d'alimentation S du turbomoteur T.

La turbine 12 est montée dans le circuit de carburant CQ de manière à être entrainée en rotation par la circulation du carburant Q. Autrement dit, la pompe 11 permet d'augmenter la pression de carburant Q dans le circuit de carburant CQ en aval de la pompe 11. Cette pression permet d'entrainer la turbine 12.

La turbomachine de pompage 1 se présente de manière préférée sous la forme d'une turbopompe hydrogène à expansion. De manière avantageuse, la turbine 12 et la pompe 11 sont entièrement baignés dans le carburant, en particulier de l'hydrogène pur, ce qui réduit les problématiques d'étanchéité dynamique liées à l'entrainement, en particulier, comme cela peut être le cas avec un entrainement par un moteur électrique. Toute fuite au niveau de la pompe 11 peut être réinjectée dans la turbine 12, en amont ou en aval de celle-ci. Le guidage en rotation peut avantageusement être assuré par des paliers fluides garantissant une durée de vie optimale sans recours à une lubrification.

Comme illustré à la [Fig.4], il est représenté une turbomachine de chauffage 2 configurée pour prélever un flux d'air A à une entrée d'air EA, de préférence à l'extérieur de l'aéronef ou dans le turbomoteur T, et pour alimenter le premier échangeur thermique 31. A titre d'exemple, l'entrée d'air EA peut correspondre à un prélèvement d'air au niveau d'un compresseur du turbomoteur T.

La turbomachine de chauffage 2 comprend un compresseur d'admission d'air 21, une chambre de combustion 24 et une turbine d'échappement d'air 22 configurée pour entrainer le compresseur d'admission d'air 21.

Dans cet exemple, le compresseur d'admission d'air 21 et la turbine d'échappement d'air 22 sont reliés solidairement en rotation par un arbre 23. La turbomachine de chauffage 2 permet de prélever en amont un flux d'air A pour l'évacuer en aval après chauffage.

Dans cette forme de réalisation, le premier échangeur de chaleur 31 est alimenté avec un flux d'air A aval d'échappement (à haute température) tandis que le deuxième échangeur de chaleur 32 est alimenté avec un flux d'air A amont d'admission (à température inférieure à celle de l'échappement). De manière préférée, le deuxième échangeur de chaleur 32 est positionné en amont du premier échangeur de chaleur 31 sur le circuit de carburant CQ. Ainsi, le deuxième échangeur de chaleur 32 remplit une fonction de préchauffage par rapport au premier échangeur de chaleur 31 qui assure le réchauffage principal. Une telle disposition permet d'optimiser le rendement du chauffage et d'éviter la condensation et/ou le givrage de l'eau contenue dans l'air au contact du carburant Q dans le premier échangeur thermique 31. Ainsi, la sortie S du circuit de carburant CQ est alimentée avec du carburant à température optimale.

Selon l'invention, la chambre de combustion 24 est alimentée par de l'air prélevé dans le flux d'air A et par du carburant Q issu du circuit de carburant CQ et prélevé en aval de la turbine 12. Ainsi, la chambre de combustion 24 de la turbomachine de chauffage 2 est alimentée avec du carburant Q à température optimale et à pression optimale.

La turbomachine de chauffage 2 se présente de manière préférée sous la forme d'une turbomachine à cycle de Brayton et permet de générer un flux d'air chaud de manière apporter des calories au carburant Q.

Toujours en référence à la [Fig.4], le système de conditionnement SC comporte un organe de bifurcation 4, comportant par exemple une vanne à 3 voies, configurée pour recevoir en entrée du carburant Q issu de la turbine 12 et pour alimenter, d'une part, la chambre de combustion 24 de la turbomachine de chauffage 2 et, d'autre part, la sortie d'alimentation S du turbomoteur T.

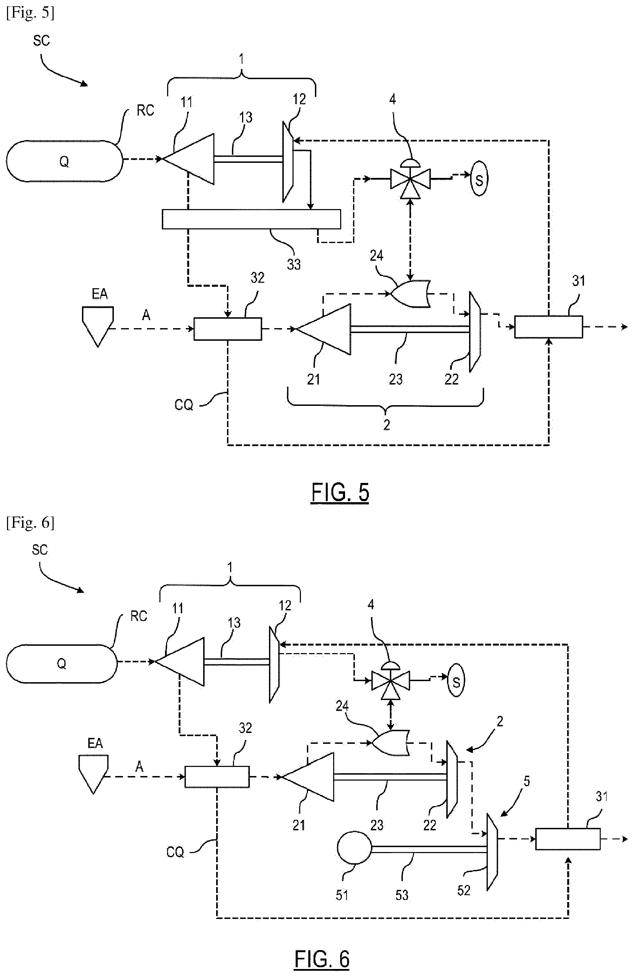

Selon un aspect optionnel, en référence à la [Fig.5], le système de conditionnement SC comprend en outre un échangeur thermique auxiliaire 33 configuré pour réchauffer le carburant Q dans une portion amont du circuit de carburant CQ par circulation de carburant Q circulant en aval de la turbine 12. De manière préférée, l'échangeur thermique auxiliaire 33 est positionné à proximité de la turbomachine de pompage 1. L'échangeur thermique auxiliaire 33 du type carburant/carburant permet de réchauffer progressivement le carburant en sortie du réservoir cryogénique RC. Cela permet d'éviter la condensation et/ou le givrage de l'eau contenue dans l'air au contact du carburant Q dans le deuxième échangeur thermique 32 et/ou le premier échangeur thermique 31.

Il va de soi qu'au moins un échangeur thermique pourrait être positionné en amont de la turbine 12 ou en amont du premier échangeur thermique 31 pour apporter des calories issues de sources de chaleur issues de l'aéronef et/ou du turbomoteur T.

Selon un aspect optionnel, en référence à la [Fig.6], le système de conditionnement SC comprend en outre une génératrice électrique 51 entrainée par une turbine libre 52 configurée pour être entrainée par un flux d'air A issu de la turbomachine de chauffage 2. Dans cet exemple, la génératrice électrique 51 est entrainée par la turbine libre 52 via un arbre 53. La rotation de la turbine libre 52 permet avantageusement de générer de l'énergie électrique pour alimenter en énergie électrique, par exemple, les fonctions de l'aéronef non propulsives, ce qui permet de limiter les prélèvements mécaniques sur le turbomoteur.

Selon un autre aspect de l'invention, la génératrice électrique 51 peut être couplée à la turbomachine de chauffage 2, en particulier, de manière directe ou par l'intermédiaire d'un train d'engrenages (non représenté).

Un procédé de conditionnement de carburant au moyen d'un système de conditionnement SC selon l'invention va être dorénavant présenté en référence à la [Fig.4].

Au cours du procédé, la pompe 11 de la turbomachine de pompage 1 prélève du carburant dans le réservoir cryogénique RC et le fait circuler d'amont en aval dans un circuit de carburant CQ. Lors du pompage, la pression du carburant Q s'élève.

De manière avantageuse, la circulation du carburant Q dans le circuit de carburant CQ entraine en rotation la turbine 12 de la turbomachine de pompage 1, ce qui permet d'utiliser l'enthalpie du carburant Q pour générer un mouvement. De plus, suite à l'entrainement, la pression du carburant Q est optimale pour alimenter une chambre de combustion, à savoir, aussi bien celle du turbomoteur T que celle de la turbomachine de chauffage 2.

Dans cet exemple, le carburant Q est tout d'abord réchauffé dans le circuit de carburant CQ par le deuxième échangeur thermique 32 par circulation d'un flux d'air A amont prélevé par la turbomachine de chauffage 2. Ce flux d'air A permet d'assurer un préchauffage. Puis, le carburant Q est réchauffé dans le circuit de carburant CQ par le premier échangeur thermique 31 par circulation d'un flux d'air A aval issu de la turbomachine de chauffage 2. La chambre de combustion 24 de la turbomachine de chauffage 2 est alimentée par de l'air prélevé dans le flux d'air A et par du carburant Q issu du circuit de carburant CQ et prélevé en aval de la turbine 12. La turbomachine de chauffage 2 permet de mettre en œuvre un cycle de Brayton pour apporter des calories directement au circuit de carburant CQ. La température et la pression du carburant Q sont ainsi augmentées par le système de conditionnement SC pour alimenter directement le turbomoteur T.

En référence à la [Fig.3], le positionnement du système de conditionnement SC dans le référentiel aéronef REF-A permet de réduire l'encombrement dans le référentiel du turbomoteur REF-T. Un tel système de conditionnement SC permet d'assurer un compromis entre simplicité et sécurité de mise en œuvre pour la conduite de circulation 6 reliant le système de conditionnement SC au turbomoteur T. En effet, comme le système de conditionnement SC permet d'augmenter la pression et d'augmenter la température du carburant Q, il n'est plus nécessaire d'isoler la conduite de circulation 6 reliant le système de conditionnement SC au turbomoteur T. Le carburant Q est comprimé et réchauffé jusqu'à un état supercritique où sa mise en œuvre ne présente plus de difficulté vis-à-vis des instabilités thermofluidiques inhérentes à la mise en froid. Les technologies usuelles pour la distribution de gaz sous pression peuvent alors avantageusement être mises en œuvre en lieu et place de solutions plus complexes requises par les fluides cryogéniques.

Avantageusement, grâce au système de conditionnement SC, le conditionnement du carburant dans un réservoir cryogénique RC et l'utilisation du carburant dans le turbomoteur T sont découplés, ce qui simplifie la gestion. De manière avantageuse, les vitesses de rotation de la turbomachine de pompage 1 et de la turbomachine de chauffage 2 peuvent être réglées de manière indépendante afin d'optimiser le réchauffage du carburant Q.

En outre, il n'est avantageusement plus nécessaire de placer un échangeur au niveau de la tuyère du turbomoteur T comme dans l'art antérieur. Les performances du turbomoteur T, en particulier liées à l'écoulement du flux primaire, ne sont pas affectées.

De manière avantageuse, de l'azote peut servir de gaz neutre pour les purges et balayages de la conduite de circulation 6, ce qui facilite la mise en œuvre par comparaison à l'hélium. Enfin, le système de conditionnement SC permet de fonctionner de manière autonome en consommant une fraction du carburant Q pompé dans le réservoir cryogénique RC.

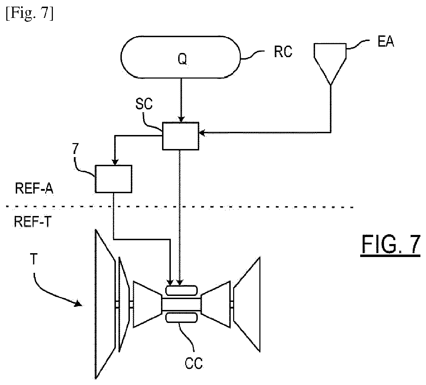

Selon un autre aspect de l'invention, en référence à la [Fig.7], le système de conditionnement SC est configuré pour alimenter une ou plusieurs capacités de stockage tampon en carburant 7, ci-après capacités de stockage 7. De telles capacités de stockage 7 permettent d'assurer un débit suffisant de carburant Q lors des phases transitoires du turbomoteur T ou lorsque le système de conditionnement SC ne fournit pas un débit suffisant. Lorsque la demande en carburant en débit est plus faible, le système de conditionnement SC alimente les capacités de stockage 7. Ainsi, même en conditions dégradées, le turbomoteur T dispose en toutes circonstance d'un carburant à haute pression et à température ambiante prêt à être utilisé par le turbomoteur T.

## Revendications

1. Système de conditionnement de carburant (SC) configuré pour alimenter un turbomoteur d'aéronef (T) à partir de carburant (Q) issu d'un réservoir cryogénique (RC), le système de conditionnement (SC) comprenant :
- au moins une turbomachine de pompage (1), distincte du turbomoteur d'aéronef (T), comprenant une pompe (11) et une turbine (12) configurée pour entrainer la pompe (11), la pompe (11) étant configurée pour prélever du carburant (Q) issu du réservoir cryogénique (RC) et le faire circuler d'amont en aval dans un circuit de carburant (CQ) comprenant une sortie d'alimentation (S) du turbomoteur (T), la turbine (12) étant montée dans le circuit de carburant (CQ) de manière à permettre l'entrainement en rotation de la turbine (12) par la circulation du carburant (Q), et
- un premier échangeur thermique (31), monté en amont de la turbine (12), configuré pour réchauffer le carburant (Q) dans le circuit de carburant (CQ) par circulation d'un flux d'air (A),
**caractérisé en ce que** le système de conditionnement comprend en outre:
- au moins une turbomachine de chauffage (2), distincte du turbomoteur d'aéronef (T), configurée pour alimenter le premier échangeur thermique (31) avec un flux d'air (A), la turbomachine de chauffage (2) comportant un compresseur d'admission d'air (21), une chambre de combustion (24) et une turbine d'échappement d'air (22) configurée pour entrainer le compresseur d'admission d'air (21), la chambre de combustion (24) étant alimentée par de l'air prélevé dans le flux d'air (A) et par du carburant (Q) issu du circuit de carburant (CQ).

2. Système selon la revendication 1 comprenant un deuxième échangeur thermique (32) configuré pour réchauffer le carburant (Q) dans le circuit de carburant (CQ) par circulation d'un flux d'air d'admission de la turbomachine de chauffage (2).

3. Système selon l'une des revendications 1 à 2 comprenant un échangeur thermique auxiliaire (33) configuré pour réchauffer le carburant (Q) dans une portion amont du circuit de carburant (CQ) par circulation de carburant (Q) circulant en aval de la turbine (12).

4. Système selon l'une des revendications 1 à 3 comprenant une génératrice électrique (51) configurée pour être entrainée par la turbomachine de chauffage (2).

5. Système selon l'une des revendications 1 à 4, dans lequel la turbomachine de chauffage (2) est configurée pour mettre en oeuvre un cycle de Brayton.

6. Système selon l'une des revendications 1 à 5, dans lequel la turbomachine de pompage (1) est baignée entièrement dans le carburant (Q).

7. Système selon l'une des revendications 1 à 6, dans lequel la turbomachine de pompage (1) est une turbopompe hydrogène à expansion.

8. Ensemble d'au moins un réservoir cryogénique (RC), d'un turbomoteur d'aéronef (T) et d'un système de conditionnement (SC) selon l'une des revendications précédentes reliant fluidiquement le réservoir cryogénique (RC) et le turbomoteur d'aéronef (T).

9. Ensemble selon la revendication 8, comprenant au moins une capacité de stockage tampon en carburant (7) configurée pour être alimentée par le système de conditionnement (SC) et configurée pour alimenter le turbomoteur d'aéronef (T).

10. Procédé de conditionnement de carburant (SC) au moyen d'un système de conditionnement (SC) selon l'une des revendications 1 à 7 pour alimenter un turbomoteur d'aéronef (T) à partir de carburant (Q) issu d'un réservoir cryogénique (RC), procédé dans lequel :
- la pompe (11) de la turbomachine de pompage (1) prélève du carburant dans le réservoir cryogénique (RC) et le fait circuler d'amont en aval dans un circuit de carburant (CQ),
- le carburant (Q) est réchauffé dans le circuit de carburant (CQ) par le premier échangeur thermique (31) par circulation d'un flux d'air (A) issu de la turbomachine de chauffage (2),
- la circulation du carburant (Q) dans le circuit de carburant (CQ) entrainant en rotation la turbine (12) de la turbomachine de pompage (1), et
- la chambre de combustion (24) de la turbomachine de chauffage (2) étant alimentée par de l'air prélevé dans le flux d'air (A) et par du carburant (Q) issu du circuit de carburant (CQ).

## Patentansprüche

1. Treibstoffkonditionierungssystem (SC), das zur Versorgung eines Flugzeugturbinentriebwerks (T) mit Treibstoff (Q) aus einem Kryotank (RC) ausgelegt ist, wobei das Konditionierungssystem (SC) umfasst:
- mindestens eine Pumpturbomaschine (1), die vom Flugzeugturbinentriebwerk (T) verschieden ist, umfassend eine Pumpe (11) und eine Turbine (12), die zum Antreiben der Pumpe (11) ausgelegt ist, wobei die Pumpe (11) ausgelegt ist, um Treibstoff (Q) aus dem Kryotank (RC) zu entnehmen und ihn in einem Treibstoffkreislauf (CQ), der einen Versorgungsausgang (S) des Turbinentriebwerks (T) umfasst, von stromaufwärts nach stromabwärts in Zirkulation zu versetzen, wobei die Turbine (12) derart in den Treibstoffkreislauf (CQ) eingebaut ist, dass der Rotationsantrieb der Turbine (12) durch die Zirkulation des Treibstoffs (Q) ermöglicht wird, und
- einen ersten Wärmetauscher (31), der stromaufwärts der Turbine (12) angebracht ist, der ausgelegt ist, um den Treibstoff (Q) im Treibstoffkreislauf (CQ) durch Zirkulieren eines Luftstroms (A) zu erwärmen,
**dadurch gekennzeichnet, dass** das Konditionierungssystem ferner umfasst:
- mindestens eine Heizturbomaschine (2), die vom Flugzeugturbinentriebwerk (T) verschieden ist, die ausgelegt ist, um den ersten Wärmetauscher (31) mit einem Luftstrom (A) zu versorgen, wobei die Heizturbomaschine (2) einen Lufteinlasskompressor (21), eine Brennkammer (24) und eine Luftauslassturbine (22) umfasst, die ausgelegt ist, um den Lufteinlasskompressor (21) anzutreiben, wobei die Brennkammer (24) mit Luft aus dem Luftstrom (A) und mit Treibstoff (Q) aus dem Treibstoffkreislauf (CQ) versorgt wird.

2. System nach Anspruch 1, umfassend einen zweiten Wärmetauscher (32), der ausgelegt ist, um den Treibstoff (Q) im Treibstoffkreislauf (CQ) durch Zirkulieren eines Einlassluftstroms der Heizturbomaschine (2) zu erwärmen.

3. System nach einem der Ansprüche 1 bis 2, umfassend einen Hilfswärmetauscher (33), der ausgelegt ist, um den Treibstoff (Q) in einem stromaufwärtigen Abschnitt des Treibstoffkreislaufs (CQ) durch Zirkulieren von Treibstoff (Q) zu erwärmen, der stromabwärts der Turbine (12) zirkuliert.

4. System nach einem der Ansprüche 1 bis 3, umfassend einen elektrischen Generator (51), der ausgelegt ist, um von der Heizturbomaschine (2) angetrieben zu werden.

5. System nach einem der Ansprüche 1 bis 4, wobei die Heizturbomaschine (2) ausgelegt ist, um einen Brayton-Zyklus durchzuführen.

6. System nach einem der Ansprüche 1 bis 5, wobei die Pumpturbomaschine (1) vollständig im Treibstoff (Q) schwimmt.

7. System nach einem der Ansprüche 1 bis 6, wobei die Pumpturbomaschine (1) eine Wasserstoff-Expansions-Turbopumpe ist.

8. Anordnung aus mindestens einem Kryotank (RC), einem Flugzeugturbinentriebwerk (T) und einem Konditionierungssystem (SC) nach einem der vorstehenden Ansprüche, das den Kryotank (RC) und das Flugzeugturbinentriebwerk (T) fluidisch verbindet.

9. Anordnung nach Anspruch 8, umfassend mindestens eine Treibstoff-Pufferspeicherkapazität (7), die ausgelegt ist, um vom Konditionierungssystem (SC) versorgt zu werden und ausgelegt ist, um das Flugzeugturbinentriebwerk (T) zu versorgen.

10. Verfahren zur Treibstoffkonditionierung (SC) mittels eines Konditionierungssystems (SC) nach einem der Ansprüche 1 bis 7, um ein Flugzeugturbinentriebwerk (T) mit Treibstoff (Q) aus einem Kryotank (RC) zu versorgen, wobei bei dem Verfahren:
- die Pumpe (11) der Pumpturbomaschine (1) Treibstoff aus dem Kryotank (RC) entnimmt und ihn in einem Treibstoffkreislauf (CQ) von stromaufwärts nach stromabwärts in Zirkulation versetzt,
- der Treibstoff (Q) im Treibstoffkreislauf (CQ) durch den ersten Wärmetauscher (31) durch Zirkulieren eines Luftstroms (A) aus der Heizturbomaschine (2) erwärmt wird,
- wobei die Zirkulation des Treibstoffs (Q) im Treibstoffkreislauf (CQ) die Turbine (12) der Pumpturbomaschine (1) rotatorisch antreibt, und
- wobei die Brennkammer (24) der Heizturbomaschine (2) mit Luft aus dem Luftstrom (A) und mit Treibstoff (Q) aus dem Treibstoffkreislauf (CQ) versorgt wird.

## Claims

1. Fuel conditioning system (SC) configured to supply an aircraft turbine engine (T) from fuel (Q) from a cryogenic tank (RC), the conditioning system (SC) comprising:
- at least one pumping turbomachine (1), separate from the aircraft turbine engine (T), comprising a pump (11) and a turbine (12) configured to drive the pump (11), the pump (11) being configured to take fuel (Q) from the cryogenic tank (RC) and circulate it from downstream to upstream in a fuel circuit (CQ) comprising a supply outlet (S) of the turbine engine (T), the turbine (12) being mounted in the fuel circuit (CQ) so as to allow the driving in rotation of the turbine (12) by the circulation of the fuel (Q), and
- a first heat exchanger (31), mounted upstream of the turbine (12), configured to heat the fuel (Q) in the fuel circuit (CQ) by circulating an air flow (A), **characterized in that** the conditioning system furthermore comprises:
- at least one heating turbomachine (2), separate from the aircraft turbine engine (T), configured to supply the first heat exchanger (31) with an air flow (A), the heating turbomachine (2) comprising an air intake compressor (21), a combustion chamber (24) and an air exhaust turbine (22) configured to drive the air intake compressor (21), the combustion chamber (24) being supplied by air taken from the air flow (A) and with fuel (Q) from the fuel circuit (CQ).

2. System according to claim 1 comprising a second heat exchanger (32) configured to heat the fuel (Q) in the fuel circuit (CQ) by circulating an intake air flow from the heating turbomachine (2).

3. System according to one of claims 1 to 2 comprising an auxiliary heat exchanger (33) configured to heat the fuel (Q) in an upstream portion of the fuel circuit (CQ) by circulating fuel (Q) circulating downstream of the turbine (12).

4. System according to one of claims 1 to 3 comprising an electrical generator (51) configured to be driven by the heating turbomachine (2).

5. System according to one of claims 1 to 4, wherein the heating turbomachine (2) is configured to implement a Brayton cycle.

6. System according to one of claims 1 to 5, wherein the pumping turbomachine (1) is immersed entirely in the fuel (Q).

7. System according to one of claims 1 to 6, wherein the pumping turbomachine (1) is an expanding hydrogen turbopump.

8. Assembly of at least one cryogenic tank (RC), an aircraft turbine engine (T) and a conditioning system (SC) according to one of the preceding claims fluidically connecting the cryogenic tank (RC) and the aircraft turbine engine (T).

9. Assembly according to claim 8, comprising at least one fuel buffer storage capacity (7) configured to be supplied by the conditioning system (SC) and configured to supply the aircraft turbine engine (T).

10. Method of conditioning fuel (SC) by means of a conditioning system (SC) according to one of claims 1 to 7 to supply an aircraft turbine engine (T) from fuel (Q) from a cryogenic tank (RC), method wherein:
- the pump (11) of the pumping turbomachine (1) takes fuel from the cryogenic tank (RC) and circulates it from upstream to downstream in a fuel circuit (CQ),
- the fuel (Q) is heated in the fuel circuit (CQ) by the first heat exchanger (31) by circulating an air flow (A) from the heating turbomachine (2),
- the circulation of fuel (Q) in the fuel circuit (CQ) driving the turbine (12) of the pumping turbomachine (1) in rotation, and
- the combustion chamber (24) of the heating turbomachine (2) being supplied with air taken from the air flow (A) and with fuel (Q) from the fuel circuit (CQ).
